(19) **Europäisches Patentamt / European Patent Office / Office européen des brevets**

(11) **EP 4 490 586 B1**

(12) **FASCICULE DE BREVET EUROPEEN**

(45) Date de publication et mention de la délivrance du brevet:
**24.12.2025  Bulletin 2025/52**

(21) Numéro de dépôt: **23707130.3**

(22) Date de dépôt: **02.02.2023**

(51) Classification Internationale des Brevets (IPC):
*G05D 1/00* (2024.01)  *B60W 30/045* (2012.01)
*B60W 30/14* (2006.01)  *B60W 30/18* (2012.01)
*B60W 50/14* (2020.01)  *B60W 60/00* (2020.01)

(52) Classification Coopérative des Brevets (CPC):
**G05D 1/0223; B60W 30/045; B60W 30/143; B60W 30/18145; B60W 50/14; B60W 60/0011; G05D 1/0246;** B60W 2552/30; B60W 2556/20; B60W 2556/35

(86) Numéro de dépôt international:
**PCT/FR2023/050144**

(87) Numéro de publication internationale:
**WO 2023/170350 (14.09.2023 Gazette 2023/37)**

(54) **PROCÉDÉ DE GESTION D'UN MODE DE CONDUITE AUTONOME D'UN VÉHICULE AUTOMOBILE**

VERFAHREN ZUR VERWALTUNG EINES AUTONOMEN FAHRMODUS EINES KRAFTFAHRZEUGS

METHOD FOR MANAGING AN AUTONOMOUS DRIVING MODE OF A MOTOR VEHICLE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:  **09.03.2022  FR 2202051**

(43) Date de publication de la demande:
**15.01.2025  Bulletin 2025/03**

(73) Titulaire: **Stellantis Auto SAS 78300 Poissy (FR)**

(72) Inventeurs:
- **ET-THAQFY, Yassine Casablanca, 20620 (MA)**
- **EL HANBALI, Hamza Casablanca, 20580 (MA)**
- **NID BOUHOU, Soumia Casablanca, 20580 (MA)**
- **LAHLOU, Zoubida Casablanca, 20190 (MA)**

(74) Mandataire: **ESIP Stellantis Auto SAS Service REIP - YT800 43, rue Jean Pierre Timbaud 78300 Poissy (FR)**

(56) Documents cités:
WO-A1-2014/042364     DE-A1- 102015 212 673
JP-A- 2019 066 193

- GÁMEZ SERNA CITLALLI ET AL: "Dynamic Speed Adaptation for Path Tracking Based on Curvature Information and Speed Limits", vol. 17, no. 6, 1 October 2016 (2016-10-01), pages 1383 - 29, XP055964567, Retrieved from the Internet <URL:https://www.ncbi.nlm.nih.gov/pmc/articles/PMC5492420/pdf/sensors-17-01383.pdf> [retrieved on 20220927], DOI: 10.3390/s17061383

**Description**

La présente invention concerne de manière générale les véhicules automobiles disposant d'un mode de conduite autonome et concerne en particulier un procédé de gestion de ce mode de conduite.

Pour simplifier, dans la description qui suit, on désignera par véhicule autonome, ou véhicule disposant d'un mode de conduite autonome, un véhicule qui exploite des fonctions d'aide à la conduite permettant d'automatiser certaines fonctions de conduite habituellement dévolues au conducteur.

Le véhicule est également désigné par véhicule « hôte » ou encore « ego véhicule » ou simplement « ego ».

Le mode de conduite autonome est généralement géré par le système d'aide à la conduite du véhicule, également désigné par système ADAS (acronyme anglosaxon pour « Advanced Driver-Assistance System »).

On confondra volontairement le système ADAS avec le « superviseur » ADAS qui est l'organe destiné à superviser l'ensemble des fonctions ADAS au sein du véhicule.

Ces fonctions comprennent notamment la régulation de vitesse adaptative ou « ACC » (acronyme anglosaxon pour « Adaptive Cruise Control ») désignée également par « régulation longitudinale » ou « contrôle longitudinal » et le maintien du véhicule dans sa voie ou « LPA » (acronyme anglosaxon pour « Lane Positioning Assist ») désigné également par « régulation latérale » ou « contrôle latéral ». Ces fonctions d'aide à la conduite sont complétées par d'autres fonctions d'aide à la conduite tels que le changement semi-automatique de voie connu sous l'acronyme anglo-saxon SALC (Semi-Automatic Change Lane), l'adaptation de la vitesse dans les virages connue sous l'acronyme anglo-saxon CSA (Curve Speed Adaptation), ...

Toutes ces fonctions permettent de contrôler la trajectoire et la vitesse du véhicule dans sa voie ou de changer de voie, sans l'intervention du conducteur, et sont généralement regroupées dans une offre de service globale qui peut prendre différentes appellations évocatrices d'un mode de conduite autonome.

Les systèmes ADAS comportent généralement une pluralité de calculateurs appelés également ECU (Electronic Control Unit). Ces calculateurs reçoivent et traitent des données délivrées par une pluralité de capteurs embarqués dans le véhicule. Un des capteurs le plus généralement utilisé et qui est l'un des composants forts des systèmes ADAS est un capteur de perception tel qu'une caméra frontale, qui peut être une caméra multifonction et qui est généralement positionnée à l'avant du véhicule, contre le pare-brise du véhicule, au niveau du rétroviseur intérieur. Une telle caméra est également désignée par caméra CVM, ou simplement CVM (acronyme pour Caméra Vidéo Multifonction).

Les images numériques capturées par la caméra sont traitées par les calculateurs qui en relation avec d'autres données délivrées par les autres capteurs du véhicule, ou bases de données débarquées, commandent en autonomie, différents organes du véhicule qui agissent sur le couple moteur, les freins, l'angle volant, etc.

La fonction CSA, introduite ci-dessus, est alimentée et activée à partir des données de cartographie « électroniques » fournies par un système connu sous l'appellation « E-Horizon », ou eHorizon, signifiant « horizon électronique » et qui, en relation avec le récepteur d'informations de géo-positionnement par satellite, appelé récepteur GPS, acronyme anglo-saxon pour « Global Positioning System), permet d'étendre la portée du « champ de vision » du véhicule à environ 2 km en avant du véhicule et donc bien plus loin que le champ de vision de la caméra dont la portée maximale est de l'ordre de 180 à 200 m.

Les données de cartographie délivrées par le système E-Horizon, permettent notamment de déterminer les données de courbure des virages qui sont identifiés sur les tronçons de voie sur la trajectoire s'étendant devant le véhicule, et donc d'anticiper et adapter la dynamique du véhicule, son positionnement dans la voie et son mode de conduite : passage en mode de conduite autonome ou arrêt du mode de conduite autonome.

Toutes ces informations et notamment les données cartographiques, sont d'importance dans un mode de conduite autonome, et doivent permettre, en fusionnant les informations délivrées par la caméra et le système E-Horizon, d'informer le conducteur suffisamment tôt que le mode de conduite autonome en cours doit être arrêté ou qu'un passage à un mode de conduite autonome n'est pas autorisé pour le tronçon de route considéré.

Cependant, les données cartographiques fournies par le système E-Horizon peuvent être erronées (imprécision des données, absence ou mauvaise mise à jour, défaut matériel/logiciel, ...).

Les données de courbure des virages, délivrées par le système E-Horizon, sont les seules données prises en compte par la fonction CSA pour préparer une consigne de vitesse qui sera exploitée par le régulateur de vitesse du véhicule.

Ainsi, en cas de données erronées fournies par le système E-Horizon, il y a un risque de perte de contrôle du véhicule dans le virage et donc un danger réel pour le conducteur et les passagers du véhicule et des autres véhicules qui seraient croisés dans le virage.

En, l'état de la technique est connu du document DE102015212673A1 et de la publication « Dynamic Speed Adaptation for Path Tracking Based on Curvature Information and Speed Limits », Gamez Serna Citallini et al., SENSORS, vol. 17, n° 6, 1 octobre 2016, pages 1389-29, DOI : 10.3390/s17061383, url : https://www.ncbi.nlm.nih.gov/articles/PMC5492420/pdf/sensors-17-011383.pdf.

L'objectif de la présente invention est d'apporter une solution à ce problème en exploitant une source d'information supplémentaire permettant de vérifier la cohérence des données de courbure fournies par le système E-Horizon.

Cette source d'information supplémentaire permet par ailleurs de robustifier les informations délivrées par les autres capteurs pour avertir le conducteur qu'il doit soit reprendre le contrôle de son véhicule et donc désactiver le mode de conduite autonome offert par le système ADAS soit a contrario, d'empêcher son activation. Le mode de conduite autonome peut également être désactivé automatiquement en cas de non-réponse du conducteur et/ou d'un paramétrage déterminé.

A cet effet, la présente invention a pour premier objet un procédé de gestion d'au moins un mode de conduite autonome d'un véhicule automobile comportant un système d'assistance à la conduite, appelé système ADAS, mettant en œuvre une fonction d'adaptation de la vitesse du véhicule dans les virages, appelée fonction CSA, recevant des données de cartographie d'un système d'informations cartographiques, appelé E-Horizon, fournissant des données de courbure de la voie sur la trajectoire s'étendant devant le véhicule et aptes à commander l'activation de la fonction CSA ; ledit véhicule comportant en outre une caméra capturant des images numériques de la trajectoire s'étendant devant le véhicule ; ledit procédé consistant en partant d'une même position initiale du véhicule dans sa voie, déterminée par la caméra, à calculer une première trajectoire du véhicule à partir des données fournies par le système E-Horizon, à calculer une deuxième trajectoire du véhicule à partir des images capturées par la caméra, à calculer l'écart entre les courbures des virages des première et deuxième trajectoires calculées à une même distance déterminée de la position initiale du véhicule, et si l'écart entre les courbures des virages des première et deuxième trajectoires calculées est inférieur à un seuil déterminé, à commander l'activation de la fonction CSA.

Selon une caractéristique, le procédé consiste pour calculer la deuxième trajectoire :

- à modéliser le profil de la ligne médiane identifiée dans la voie suivie par le véhicule à partir des images numériques capturées par la caméra sur une distance déterminée s'étendant devant le véhicule, entre le véhicule et la portée maximale de la caméra, en exploitant un polynôme du 3ème degré, appelé polynôme de centre de la voie, défini dans un espace affine plan muni d'un repère cartésien X, Y centré sur le véhicule de la forme y=f(x) et s'exprimant par : $\boldsymbol{f(x)} = \boldsymbol{C3x^3 + C2x^2 + C1x + C0}$, où $\boldsymbol{x}$ représente la distance suivant l'axe de déplacement du véhicule (10) séparant l'origine du repère ; $\boldsymbol{C0}$ : la position latérale de la ligne médiane (LM) à l'origine du repère ; $\boldsymbol{C1}$ : le cap initial à l'origine du repère ; C2 : la courbure initiale ; et C3 : la dérivée de la courbure ;
- à diviser la trajectoire, considérée sur la ligne médiane de la voie, s'étendant devant le véhicule, en des premier, deuxième et troisième segments contigus et successifs, de distance déterminée en partant du véhicule ; la limite basse du premier segment correspondant à la position du véhicule et la limite haute du troisième et dernier segment dépendant de la portée maximale de la caméra ; chaque segment étant caractérisé par ses propres coefficients C0, C1, C2 et C3 ;
- à définir des premier, deuxième et troisième vecteurs respectivement sur les premier, deuxième et troisième segments, correspondant chacun à une distance déterminée par rapport au véhicule, et
- à extraire les données de courbure pour chacun des premier, deuxième et troisième vecteurs en utilisant la formule

suivante : $$courbure(x) = \frac{f''(x)}{(1+f'^2(x))^{\frac{3}{2}}}$$

Selon une autre caractéristique, le procédé consiste à définir le premier vecteur en limite supérieure du premier segment, le deuxième vecteur en limite supérieure du deuxième segment et le troisième vecteur en limite supérieure du troisième segment.

Selon une autre caractéristique, le procédé consiste pour calculer la première trajectoire :

- à calculer un nombre déterminé de points ente la position du véhicule et une distance du véhicule dépendant de la portée maximale de la caméra par une interpolation linéaire des données de courbures ; et
- à partir de chaque point interpolé, à calculer les coordonnées de la première trajectoire en se basant sur les fonctions trigonométriques Cos et Sin suivantes :

$$X(i) = X(i-1) + dx * cos(\varphi(i-1) + dx * CourbureInterpol\acute{e}e(i))$$

$$Y(i) = Y(i-1) + dx * sin(\varphi(i-1) + dx * CourbureInterpol\acute{e}e(i))$$

où $\varphi$ correspond à l'angle de lacet du véhicule.

Selon une autre caractéristique, le procédé consistant à projeter graphiquement dans un repère orthogonal XY contenant les première et deuxième trajectoires calculées au moins un point représentant une distance déterminée suivant l'axe X du point de départ des première et deuxième trajectoires calculées suivant l'axe X, et à calculer l'écart entre les distances obtenues par la projection du point déterminé sur l'axe Y, en passant par les centres des voies des première et deuxième trajectoires calculées ; l'axe des ordonnées X correspondant à la distance d'un point sur les première et deuxième trajectoires calculées du véhicule , devant le véhicule, par rapport à la position initiale du véhicule sur la voie et l'axe des abscisses Y correspondant à l'évolution du déplacement du centre de la voie sur les trajectoires calculées du véhicule, devant le véhicule, par rapport au centre de la voie considéré à la position initiale du véhicule sur la voie.

La présente invention a pour deuxième objet, un produit programme d'ordinateur comportant des instructions qui, lorsque le programme est exécuté par un ordinateur, conduisent celui-ci à mettre en œuvre les étapes du procédé tel que décrit ci-dessus.

La présente invention a pour troisième objet, un véhicule mettant en œuvre le procédé tel que décrit ci-dessus, comportant : un système d'aide à la conduite, appelé système ADAS, offrant au moins une fonction d'adaptation de la vitesse du véhicule dans les virages, appelée fonction CSA, parmi un ensemble de fonctions d'aide à la conduite agissant sur les organes de contrôle dynamique du véhicule pour être aptes à fournir un mode de conduite autonome audit véhicule ; une caméra capturant des images numériques de la voie sur la trajectoire du véhicule ; un système d'informations cartographiques, appelé E-Horizon ; un dispositif de traitement comportant des premiers moyens recevant les données de courbure du système E-Horizon et calculant une première trajectoire du véhicule et des deuxièmes moyens recevant les images numériques capturées par la caméra et calculant une deuxième trajectoire du véhicule, et un dispositif de gestion du mode de conduite dudit véhicule, couplé au dispositif de traitement ; ledit dispositif de contrôle étant agencé, en outre, pour commander le système ADAS afin d'activer ou désactiver la fonction CSA en fonction de l'écart entre les courbures du virage des première et deuxième trajectoires.

Selon une caractéristique, le véhicule comporte en outre des moyens de communication couplés au dispositif de gestion aptes à échanger par voie d'ondes des informations délivrées par le dispositif de gestion avec un espace de stockage d'informations distant permettant la mise à jour des données cartographiques du système E-Horizon.

Enfin, selon une autre caractéristique, le véhicule est un véhicule autonome.

D'autres avantages et caractéristiques pourront ressortir plus clairement de la description qui va suivre, donnée uniquement à titre d'exemple non limitatif et faite en se référant aux dessins dans lesquels :

[Fig. 1] illustre un schéma-bloc d'un véhicule automobile mettant en œuvre un procédé de gestion du mode de conduite autonome, selon l'invention ;

[Fig. 2] illustre un logigramme des principales étapes du procédé de gestion du mode de conduite autonome selon l'invention ;

[Fig. 3] illustre un logigramme des étapes de construction d'une première trajectoire du procédé de gestion du mode de conduite autonome selon l'invention ;

[Fig. 4] illustre graphiquement les étapes de construction de la première trajectoire du procédé de gestion du mode de conduite autonome selon l'invention ;

[Fig. 5] illustre un logigramme des étapes de construction d'une deuxième trajectoire du procédé de gestion du mode de conduite autonome selon l'invention ;

[Fig. 6] illustre graphiquement les étapes de construction de la deuxième trajectoire du procédé de gestion du mode de conduite autonome selon l'invention ; et

[Fig. 7] illustre graphiquement le calcul de l'écart entre les première et deuxième trajectoires du procédé de gestion du mode de conduite autonome selon l'invention.

Le procédé selon l'invention se base sur un mode de validation des données fournies par le système E-Horizon en utilisant les données fournies à partir de la caméra CVM. Ce mode de validation se base sur la vérification de la cohérence de ces données en construisant une première trajectoire $T_{E-Horizon}$ prédite à partir des données de courbure fournies par le système E-Horizon et une deuxième trajectoire $T_{CVM}$ prédite à partir des images capturées par la caméra CVM puis à comparer les deux trajectoires pour valider la fiabilité des données fournies par le système E-Horizon quand la comparaison des deux trajectoires valide un seuil, ou niveau, de confiance déterminé. Quand le seuil de confiance est atteint, la fonction CSA est activée, ou reste activée, sinon, la fonction CSA est désactivée, ou n'est pas activée, en laissant suffisamment de temps au système ADAS, gérant le mode autonome de conduite pour réagir en décélérant, freinant ou tout simplement alerter le conducteur et lui donner le contrôle avant d'atteindre le virage.

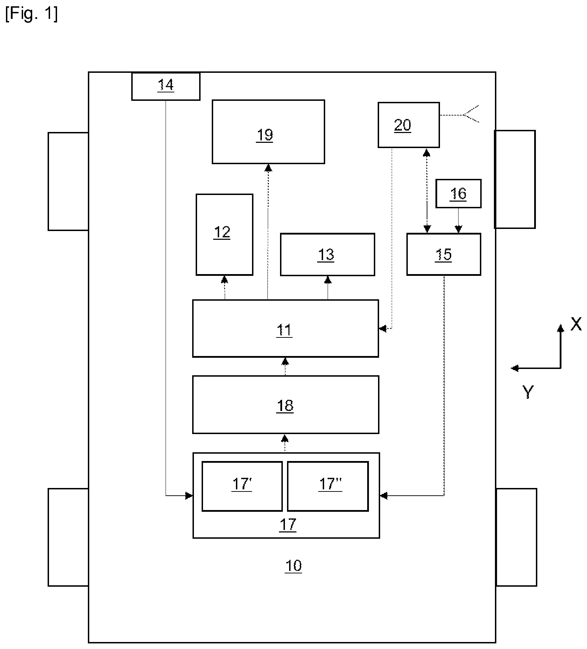

La figure 1 illustre sous la forme d'un schéma-bloc, un véhicule automobile 10 mettant en œuvre le procédé selon l'invention. La véhicule 10 comporte un système ADAS 11 offrant des fonctions de mode de conduite autonome agissant sur des organes de contrôle du comportement dynamique du véhicule 10 dont au moins un organe de contrôle longitudinal 12 et un organe de contrôle latéral 13.

Le véhicule 10 comporte en outre une caméra frontale (ou multifonction) CVM 14, et autres capteurs, non représentés : capteurs de pédales (frein, accélérateur, embrayage), un capteur d'angle volant (angle de rotation du volant de direction), un capteur de rapport de vitesse engagé dans la boite de vitesses, un indicateur de changement de direction (clignotant), un capteur d'angle de lacet ou cap, etc.

La fonction CSA, introduite ci-dessus, est alimentée et activée à partir des données de cartographie « électroniques » fournies par un système E-Horizon 15 et qui, en relation avec un récepteur 16 d'informations de géo-positionnement par satellite, appelé récepteur GPS, acronyme anglo-saxon pour « Global Positioning System), permet d'étendre la portée du « champ de vision » du véhicule 10 à environ 2 km en avant du véhicule 10 et donc bien plus loin que le champ de vision de la caméra 14 dont la portée maximale est de l'ordre de 180 à 200 m.

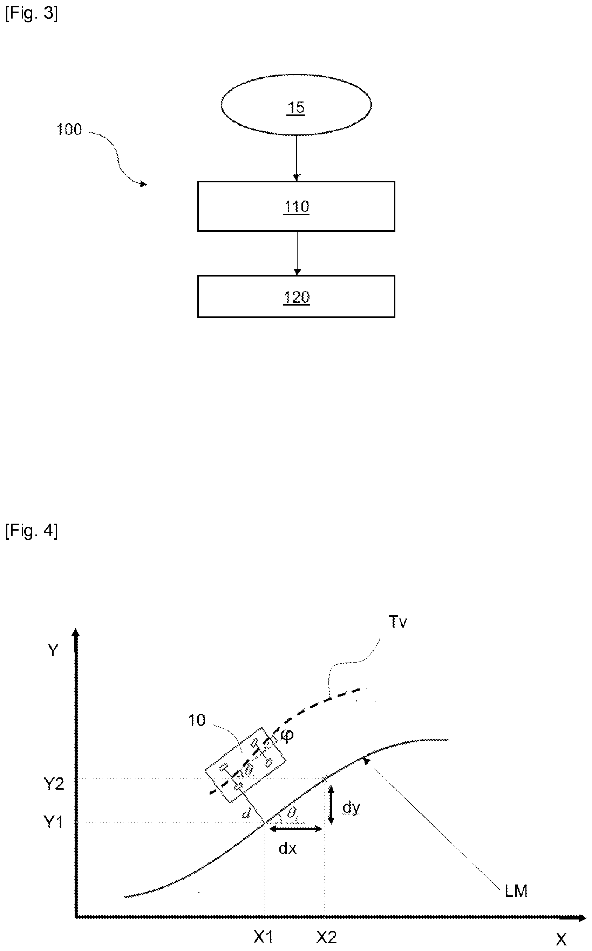

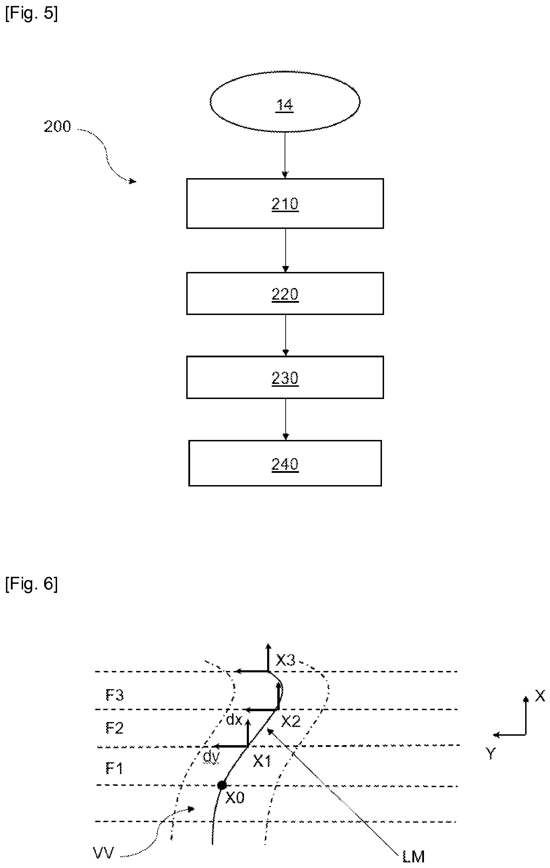

Le véhicule 10 comporte un dispositif de traitement 17, couplé au dispositif E-Horizon 15 et à la caméra CVM 14. Le dispositif de traitement 17 comporte des premiers moyens 17' agencés pour calculer une première trajectoire $T_{E-Horizon}$ prédite à partir des données de courbure fournies par le système E-Horizon (Figure 4). Le dispositif de traitement 17 comporte des deuxièmes moyens 17" agencés pour calculer une deuxième trajectoire $T_{CVM}$ prédite à partir des images capturées par la caméra CVM 14 (Figure 6).

Le véhicule 10 comporte un dispositif de gestion 18, couplé en sortie du dispositif de traitement 17, et qui en fonction de l'écart entre les données de courbure du virage à venir des première et deuxième trajectoires $T_{E-Horizon}$ et $T_{CVM}$ calculées par le dispositif de traitement 17, commande le système ADAS 11 pour gérer le mode de conduite autonome via les organes de contrôle 12 et 13.

Le dispositif de gestion 18 compare les données et informations fournies par les deux sources d'information de données de courbure 14 et 15 du virage.

En l'absence d'information cohérente provenant des deux sources d'information, la fonction CSA n'est pas activée. Pour évaluer cette cohérence, le procédé selon l'invention utilise un indicateur déterminé quantifiant un niveau de fiabilité qui sera comparé à un seuil de niveau de confiance déterminé.

On décrit ci-après, plusieurs scénarii de gestion qui sont fournis par le dispositif de gestion 18.

Selon un premier scénario, la gestion consiste a minima, à commander le système ADAS 11, pour alerter le conducteur via une interface homme-machine IHM 19 dédiée, d'un changement à prévoir dans le mode de conduite du véhicule 10.

Selon un deuxième scénario, la gestion consiste à commander le système ADAS 11 pour adapter le mode de conduite autonome du véhicule 10 en diminuant la vitesse longitudinale du véhicule 10 et/ou en interdisant tout changement de voie.

Selon un troisième scénario, la gestion consiste, à la suite d'une détection d'une information de fin de zone de mode de conduite autonome (courbure de virage trop importante, ...), à commander le système ADAS 11 pour alerter le conducteur et lui demander une reprise en main du véhicule 10 car les zones telles les virages serrés ou les routes présentant un danger ne sont pour l'instant pas gérées ou pas encore gérées de manière fiable par le mode de conduite autonome.

Selon un quatrième scénario, la gestion consiste à commander le système ADAS 11 pour désactiver les fonctions ADAS en rapport avec le mode de conduite autonome.

Le dispositif de gestion 18 permet ainsi d'anticiper la fin du mode de conduite autonome pour permette au conducteur de reprendre la main sur la conduite de son véhicule 10 en toute sérénité.

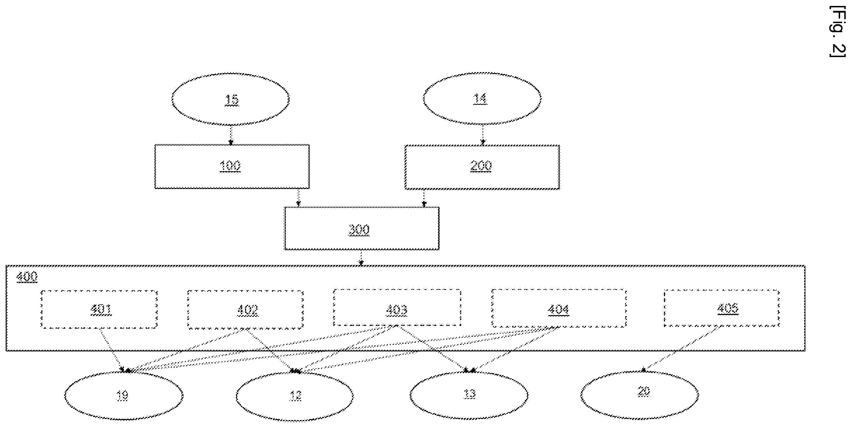

Les différentes étapes du procédé mises en œuvre par le véhicule 10 sont décrites ci-après en référence à la figure 2.

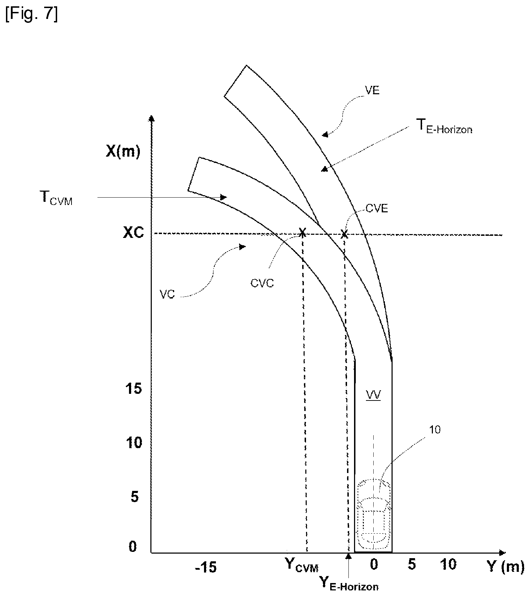

Le procédé de gestion 18 du mode de conduite autonome selon l'invention consiste à contrôler 300 (figure 7) la cohérence entre les données fournies par le système E-Horizon 15 et les données fournies par la caméra 14.

Les données de courbure fournies par le système E-Horizon 15 sont traitées à l'étape 100 décrite plus en détail ci-après, et permettent de prédire une première trajectoire $T_{E-Horizon}$ comportant un premier virage à venir.

Les données fournies par la caméra 14 sont traitées à l'étape 200 pour prédire une deuxième trajectoire $T_{CVM}$ à partir des images capturées par la caméra 14.

Les différentes étapes de commande du système ADAS 11 consistent :

- à commander 400 le système ADAS 11 pour réguler 402 la vitesse du véhicule 10 en agissant sur l'organe de contrôle longitudinal 12 et en affichant une alerte destinée au conducteur via l'IHM 19 en cas d'arrêt/démarrage de la régulation ;
- à activer 403 la fonction CSA et donc le mode de conduite autonome en agissant notamment sur les organes de contrôle longitudinal 12 et latéral 13 ;
- à avertir 401, le conducteur en affichant une alerte destinée au conducteur via l'IHM 19 de l'activation/désactivation du mode autonome, et ;
- à demander 404 au conducteur via l'IHM 19, de reprendre la main sur la conduite du véhicule 10 notamment en reprenant la main sur les organes de contrôle longitudinal 12 et latéral 13 en cas désactivation de la fonction CSA.

Enfin, les données de détection peuvent être transmises 405 à l'infrastructure routière et/ou d'autres véhicules disposant comme le véhicule 10 d'un module de communication 20 (figure 1) en utilisant par exemple un protocole de communication V2X (protocole de communication entre véhicules et/ou entre véhicules et l'infrastructure routière) ou encore stockées dans des espaces de stockage de données distants (désignés également « Clouds » en terminologie anglosaxonne) pour permettre la mise à jour des cartographies couvrant le lieu de la détection.

Les informations transmises par l'infrastructure et/ou des autres véhicules connectés au véhicule 10, via le dispositif de communication 20, sont avantageusement fusionnées avec les informations délivrées par la caméra CVM 14, et l'ensemble des capteurs embarqués dans le véhicule 10, et sont prises en compte par le dispositif de gestion 18 pour mettre à jour les données de cartographie et ainsi robustifier les données de courbure et la fonction CSA.

La figure 3 illustre les sous-étapes 110 et 120 de l'étape 100 du procédé de gestion et la figure 4 illustre graphiquement l'étape 100 permettant de déterminer les données de courbure du virage à venir et prédire la première trajectoire $T_{E\text{-}Horizon}$.

Dans une première sous-étape 110, le procédé consiste à calculer un nombre déterminé de points ente la position du véhicule 10 et une distance du véhicule 10 déterminée dépendant de la portée maximale de la caméra 14 en effectuant une interpolation linéaire des données de courbure. L'interpolation permet d'obtenir plus de points ente la position du véhicule 10 et une distance maximale imposée par le champ de vision de la caméra 14 (environ 200m).

Dans une deuxième sous-étape 120, le procédé consiste, à partir de chaque point interpolé, à calculer les coordonnées X et Y de la première trajectoire $T_{E\text{-}Horizon}$ en se basant sur les fonctions trigonométriques Cos et Sin suivantes :

$$X(i) = X(i-1) + dx * cos(\varphi(i-1) + dx * CourbureInterpol\text{é}e(i))$$

$$Y(i) = Y(i-1) + dx * sin(\varphi(i-1) + dx * CourbureInterpol\text{é}e(i))$$

Les conditions initiales sont fixées par les données de la caméra 14 pour la position initiale du véhicule 10 (X= 0, Y= 0) avec son angle de lacet $\varphi$ initial.

La figure 5 illustre les sous-étapes de l'étape 200 du procédé de gestion et la figure 6 illustre graphiquement certaines de ces sous-étapes. Les sous-étapes 210-240 permettent de déterminer les données de courbure en exploitant les images numériques capturées par la caméra CVM 14 utilisée comme autre source d'informations apte à délivrer des données de courbure fiables de la voie VV.

Pour cela, la procédé se base sur un modèle numérique associé à la caméra CVM 14 pour modéliser 210 le profil de la ligne médiane LM de la voie VV (ou centre de la voie) identifiée dans les images numériques capturées par la caméra CVM 14, en exploitant une fonction polynomiale du troisième degré appelée « polynôme du centre de la voie ego ». Ce polynôme est défini dans un espace affine plan muni d'un repère cartésien XY centré sur le véhicule 10, de la forme y=f(x) :

$$f(x) = C3x^3 + C2x^2 + C1x + C0$$

x représente la distance, suivant l'axe de déplacement du véhicule 10, axe longitudinal selon X, séparant l'origine du repère.

**C0** : la position latérale de la ligne médiane LM à l'origine du repère, c'est-à-dire au niveau du véhicule 10

**C1** : le cap (ou angle de lacet) initial à l'origine du repère, c'est-à-dire au niveau du véhicule 10

C2 : la courbure initiale

C3 : la dérivée de la courbure

Comme illustré graphiquement à la figure 4, le procédé consiste à diviser 120 la trajectoire du véhicule 10 en trois segments successifs contigus F1, F2 et F3. Chaque segment F1, F2 et F3 est caractérisé par ses propres coefficients : C0, C1, C2 et C3.

Le procédé consiste ensuite à choisir 230 trois vecteurs X1, X2 et X3 sur chaque segment F1, F2 et F3, positionnés respectivement à des distances déterminées par rapport au véhicule 10, par exemple X1 = 50 m (limite haute du segment F1), X2 = 100 m (limite haute du segment F2) et X3 = 150 m (limite haute du segment F3). Chaque vecteur X1, X2 et X3 comporte des composantes latérales dy et longitudinales dx.

La limite basse du segment F1 correspond à la position du véhicule 10 et la limite haute du segment F3 dépend de la portée maximale de la caméra CVM 14.

Le procédé consiste enfin à extraire 240 les données de courbure pour chacun des vecteurs X1, X2 et X3 en utilisant la formule suivante :

$$courbure(x) = \frac{f''(x)}{(1+f'^2(x))^{\frac{3}{2}}}$$

La figure 7 illustre graphiquement l'étape 300 (figure 2) du procédé de gestion selon l'invention mise en œuvre par le dispositif de gestion 18 (figure 1). Sur cette figure, et à titre d'exemple, des première et deuxième trajectoires $T_{E\text{-}Horizon}$ et $T_{CVM}$ construites par le dispositif de traitement 17, sont représentées dans un repère orthogonal XY : L'axe des ordonnées X correspond à la distance en mètre (m) d'un point sur la trajectoire prédite du véhicule 10, devant le véhicule 10, par rapport à la position initiale du véhicule 10 (X = 0) sur la voie VV (à la longueur du véhicule 10 près : l'échelle n'est pas respectée sur la figure). L'axe des abscisses Y correspond à l'évolution du déplacement du centre de la voie VV sur la trajectoire prédite du véhicule 10, devant le véhicule 10, par rapport au centre de la voie considéré à la position initiale du véhicule 10 (Y = 0) sur la voie VV.

Dans l'exemple considéré, les deux trajectoires $T_{E\text{-}Horizon}$ et $T_{CVM}$, d'abord communes (même valeur en Y : Y = 0) jusqu' à X = 17 m, présentent ensuite deux courbures différentes. Le rayon de courbure du virage VE de la première trajectoire $T_{E\text{-}Horizon}$ est supérieur au rayon de courbure du virage VC de la deuxième trajectoire $T_{CVM}$. Le contrôle de cohérence est basé sur la comparaison des première et deuxième trajectoires $T_{E\text{-}Horizon}$ et $T_{CVM}$. Pour comparer les première et deuxième trajectoires $T_{E\text{-}Horizon}$ et $T_{CVM}$, il suffit de projeter un point, par exemple le point représentant la distance XC du point de départ (X=0, Y=0), ou plusieurs points (distances) en X pour obtenir plus de précision sur la prédiction, dans le repère XY contenant les deux trajectoires $T_{E\text{-}Horizon}$ et $T_{CVM}$ et à calculer l'écart entre les distances $Y_{CVM}$ et $Y_{E\text{-}Horizon}$ obtenues en abscisses Y, par la projection orthogonale de la coordonnée en ordonnées X du point XC sur l'axe des abscisses Y en passant par les centres des voies CVC et CVE des première et deuxième trajectoires $T_{E\text{-}Horizon}$ et TCVM.

Si l'écart est inférieur à un seuil déterminé, l'étape de contrôle 300, mise en œuvre par le dispositif de gestion 18, conclut que les deux virages VE et VC sont cohérents et active la fonction CSA. Sinon la fonction CSA n'est pas activée.

Le procédé de gestion implémente un produit programme d'ordinateur comportant des instructions qui, lorsque le programme est exécuté par un ordinateur, conduisent celui-ci à mettre en œuvre les étapes du procédé selon l'invention.

Ce programme est implémenté par exemple, par un ou plusieurs processeurs en lien avec le système ADAS 11, appartenant par exemple à un superviseur ADAS, non représenté et déjà évoqué ci-dessus, embarqué dans le véhicule 10. Le superviseur ADAS peut être lui-même en lien avec un ou plusieurs processeurs du système IVI (In-Vehicle Infotainment), non représenté, qui est l'organe central du véhicule 10 dédié au traitement des données et à la communication avec le conducteur via l'IHM 19.

Un tel programme pourra être mis à jour avec possibilité d'ajout de services en utilisant une mise à jour par voie d'ondes de type OTA « Over The Air ».

Enfin, le dispositif de traitement 17 peut comporter un ou plusieurs calculateurs et/ou des composants logiciels dédiés à l'extraction de données de courbure à partir des images numériques captées par la caméra CVM 14. Il peut être intégré soit dans le superviseur ADAS soit dans le système IVI, ou encore réparti dans le superviseur ADAS et dans le système IVI.

**Revendications**

1. Procédé de gestion d'au moins un mode de conduite autonome d'un véhicule automobile (10) comportant un système d'assistance à la conduite, appelé système ADAS (11), mettant en œuvre une fonction d'adaptation de la vitesse du véhicule (10) dans les virages, appelée fonction CSA, recevant des données de cartographie d'un système d'informations cartographiques, appelé E-Horizon (15), fournissant des données de courbure de la voie (VV) sur la trajectoire s'étendant devant le véhicule (10) et aptes à commander l'activation de la fonction CSA ; ledit véhicule (10) comportant en outre une caméra (14) capturant des images numériques de la trajectoire s'étendant devant le véhicule (10) ; ledit procédé consistant en partant d'une même position initiale (X0, Y0) du véhicule (10) dans sa voie (VV), déterminée par la caméra (14), à calculer une première trajectoire ($T_{E\text{-}Horizon}$) du véhicule (10) à partir des données fournies par le système E-Horizon (15), **caractérisé en ce que** le procédé consiste en outre à calculer une deuxième trajectoire ($T_{CVM}$) du véhicule (10) à partir des images capturées par la caméra (14), à calculer l'écart entre les courbures des virages (VE, VC) des première et deuxième trajectoires calculées ($T_{E\text{-}Horizon}$, $T_{CVM}$) à une même distance déterminée (XC) de la position initiale (X0, Y0) du véhicule (10), et si l'écart entre les courbures des virages (VE, VC) des première et deuxième trajectoires calculées ($T_{E\text{-}Horizon}$, $T_{CVM}$) est inférieur à un seuil déterminé, à commander l'activation de la fonction CSA.

2. Procédé selon la revendication précédente, consistant pour calculer la deuxième trajectoire ($T_{CVM}$) :

- à modéliser (210) le profil de la ligne médiane (LM) identifiée dans la voie suivie (VV) par le véhicule (10) à partir des images numériques capturées par la caméra (14) sur une distance déterminée s'étendant devant le véhicule (10), entre le véhicule (10) et la portée maximale de la caméra (14), en exploitant un polynôme du 3ème degré, appelé polynôme de centre de la voie, défini dans un espace affine plan muni d'un repère cartésien X, Y centré sur le véhicule (10) de la forme y=f(x) et s'exprimant par : $f(x) = C3x^3 + C2x^2 + C1x + C0$, où $x$ représente la distance suivant l'axe de déplacement du véhicule (10) séparant l'origine du repère ; **C0** : la position latérale de la ligne médiane (LM) à l'origine du repère ; **C1** : le cap initial à l'origine du repère ; C2 : la courbure initiale ; et C3 : la dérivée de la courbure ;
- à diviser (220) la trajectoire, considérée sur la ligne médiane (LM) de la voie (VV), s'étendant devant le véhicule (10), en des premier (F1), deuxième (F2) et troisième (F3) segments contigus et successifs, de distance déterminée en partant du véhicule (10) ; la limite basse du premier segment (F1) correspondant à la position du véhicule (10) et la limite haute du troisième et dernier segment (F3) dépendant de la portée maximale de la caméra (14) ; chaque segment (F1, F2 et F3) étant **caractérisé par** ses propres coefficients C0, C1, C2 et C3,
- à définir (230) des premier, deuxième et troisième vecteurs (X1, X2 et X3) respectivement sur les premier, deuxième et troisième segments (F1, F2 et F3), correspondant chacun à une distance déterminée par rapport au véhicule (10), et
- à extraire (240) les données de courbure pour chacun des premier, deuxième et troisième vecteurs (X1, X2 et X3) en utilisant la formule suivante :

$$courbure(x) = \frac{f''(x)}{(1+f'^2(x))^{\frac{3}{2}}}$$

3. Procédé selon la revendication précédente, consistant à définir (230) le premier vecteur (X1) en limite supérieure du premier segment (F1), le deuxième vecteur (X2) en limite supérieure du deuxième segment (F2) et le troisième vecteur (X3) en limite supérieure du troisième segment (F3).

4. Procédé selon l'une des revendications précédentes, consistant pour calculer la première trajectoire ($T_{E\text{-}Horizon}$) :

- à calculer (110) un nombre déterminé de points ente la position du véhicule (10) et une distance du véhicule (10) dépendant de la portée maximale de la caméra (14) par une interpolation linéaire des données de courbures ; et
- à partir de chaque point interpolé, à calculer (120) les coordonnées (X et Y) de la première trajectoire ($T_{E\text{-}Horizon}$) en se basant sur les fonctions trigonométriques Cos et Sin suivantes :

$$X(i) = X(i-1) + dx * cos(\varphi(i-1) + dx * CourbureInterpolée(i))$$

$$Y(i) = Y(i-1) + dx * sin(\varphi(i-1) + dx * CourbureInterpolée(i))$$

où $\varphi$ correspond à l'angle de lacet du véhicule (10).

5. Procédé selon l'une des revendications précédentes, consistant à projeter graphiquement dans un repère orthogonal XY contenant les première et deuxième trajectoires calculées ($T_{E\text{-}Horizon}$, $T_{CVM}$), au moins un point (XC) représentant une distance déterminée suivant l'axe X du point de départ des première et deuxième trajectoires calculées ($T_{E\text{-}Horizon}$, $T_{CVM}$) suivant l'axe X, et à calculer l'écart entre les distances ($Y_{CVM}$ et $Y_{E\text{-}Horizon}$) obtenues par la projection du point déterminé (XC) sur l'axe Y, en passant par les centres des voies (CVE et CVC) des première et deuxième trajectoires calculées ($T_{E\text{-}Horizon}$ et $T_{CVM}$) ; l'axe des ordonnées X correspondant à la distance d'un point sur les première et deuxième trajectoires calculées ($T_{E\text{-}Horizon}$, $T_{CVM}$) du véhicule (10), devant le véhicule (10), par rapport à la position initiale du véhicule (10) sur la voie (VV) et l'axe des abscisses Y correspondant à l'évolution du déplacement du centre de la voie (VV) sur les trajectoires calculées ($T_{E\text{-}Horizon}$, $T_{CVM}$) du véhicule (10), devant le véhicule (10), par rapport au centre de la voie (VV) considéré à la position initiale du véhicule (10) sur la voie (VV).

6. Produit programme d'ordinateur comportant des instructions qui, lorsque le programme est exécuté par un ordinateur, conduisent celui-ci à mettre en œuvre les étapes du procédé selon l'une des revendications 1 à 5.

7.  Véhicule (10) mettant en œuvre le procédé selon l'une des revendications 1 à 5, comportant : un système d'aide à la conduite, appelé système ADAS (11), offrant au moins une fonction d'adaptation de la vitesse du véhicule dans les virages, appelée fonction CSA, parmi un ensemble de fonctions d'aide à la conduite agissant sur les organes de contrôle dynamique (12, 13) du véhicule (10) pour être aptes à fournir un mode de conduite autonome audit véhicule (10) ; une caméra (14) capturant des images numériques de la voie (VV) sur la trajectoire du véhicule (10) ; un système d'informations cartographiques, appelé E-Horizon (15) ; un dispositif de traitement (17) comportant des premiers moyens (17') recevant les données de courbure du système E-Horizon (15) et calculant une première trajectoire ($T_{E-Horizon}$) du véhicule (10) et des deuxièmes moyens (17") recevant les images numériques capturées par la caméra (14) et calculant une deuxième trajectoire ($T_{CVM}$) du véhicule (10), et un dispositif (18) de gestion du mode de conduite dudit véhicule (10), couplé au dispositif de traitement (17) ; ledit dispositif de contrôle (18) étant agencé, en outre, pour commander le système ADAS (11) afin d'activer ou désactiver la fonction CSA en fonction de l'écart entre les courbures du virage (VE, VC) des première et deuxième trajectoires ($T_{E-Horizon}$ et $T_{CVM}$).

8.  Véhicule (10) selon la revendication précédente, comportant en outre des moyens de communication (20) couplés au dispositif de gestion (18) aptes à échanger par voie d'ondes des informations délivrées par le dispositif de gestion (18) avec un espace de stockage d'informations distant permettant la mise à jour des données cartographiques du système E-Horizon (15)

9.  Véhicule (10) selon l'une des revendications 7 ou 8, **caractérisé en ce que** le véhicule (10) est un véhicule autonome.

## Patentansprüche

1.  Verfahren zur Steuerung mindestens eines autonomen Fahrmodus eines Kraftfahrzeugs (10), umfassend ein Fahrerassistenzsystem, genannt ADAS-System (11), das eine Fahrzeuggeschwindigkeitsanpassungsfunktion (10) in Kurven, genannt CSA-Funktion, implementiert, Kartendaten von einem Karteninformationssystem, genannt E-Horizon (15), empfängt, Fahrspurkrümmungsdaten (VV) auf der sich vor dem Fahrzeug (10) erstreckenden Trajektorie bereitstellt und die Aktivierung der CSA-Funktion steuern kann; wobei das Fahrzeug (10) ferner eine Kamera (14) umfasst, die digitale Bilder der sich vor dem Fahrzeug (10) erstreckenden Trajektorie aufnimmt; Das Verfahren besteht darin, ausgehend von der gleichen Ausgangsposition (X0, Y0) des Fahrzeugs (10) in seiner Fahrspur (VV), die von der Kamera (14) bestimmt wird, eine erste Trajektorie ($T_{E-Horizon}$) des Fahrzeugs (10) aus den vom E-Horizon-System (15) bereitgestellten Daten zu berechnen. Das Verfahren zeichnet sich dadurch aus, dass es weiterhin die Berechnung einer zweiten Trajektorie ($T_{CVM}$) des Fahrzeugs (10) aus den von der Kamera (14) aufgenommenen Bildern umfasst. Anschließend wird die Differenz der Kurvenkrümmungen (VE, VC) der ersten und zweiten berechneten Trajektorien ($T_{E-Horizon}$, $T_{CVM}$) im gleichen Abstand (XC) von der Ausgangsposition (X0, Y0) des Fahrzeugs (10) berechnet. Ist die Differenz der Kurvenkrümmungen (VE, VC) der ersten und zweiten berechneten Trajektorien ($T_{E-Horizon}$, $T_{CVM}$) kleiner als ein bestimmter Schwellenwert, wird die Aktivierung des Systems veranlasst. CSA-Funktion.

2.  Verfahren nach dem vorhergehenden Anspruch, bestehend aus der Berechnung der zweiten Trajektorie ($T_{CVM}$):

    - um (210) das Profil der Mittellinie (LM) in der vom Fahrzeug (10) befahrenen Fahrspur (VV) anhand der von der Kamera (14) über eine bestimmte Strecke vor dem Fahrzeug (10) zwischen dem Fahrzeug (10) und der maximalen Reichweite der Kamera (14) aufgenommenen digitalen Bilder zu modellieren, indem ein Polynom dritten Grades, das sogenannte Fahrspurmittelpunktpolynom, verwendet wird, das in einem ebenen affinen Raum mit einem kartesischen Koordinatensystem X, Y, dessen Mittelpunkt das Fahrzeug (10) ist, von der Form y=f(x) definiert und wie folgt ausgedrückt wird: $f(x) = C3x^3 + C2x^2 + C2x^2 + C0$, wobei x die Entfernung entlang der Bewegungsachse des Fahrzeugs (10) vom Ursprung des Koordinatensystems darstellt ; $C0$: die seitliche Position der Mittellinie (LM) am Ursprung des Koordinatensystems; $C1$: die anfängliche Richtung am Ursprung des Koordinatensystems; $C2$: die anfängliche Krümmung; und C3: die Ableitung der Krümmung;
    - die auf der Mittellinie (LM) der Fahrspur (VV) betrachtete und sich vor dem Fahrzeug (10) erstreckende Trajektorie (220) in ein erstes (F1), zweites (F2) und drittes (F3) zusammenhängendes und aufeinanderfolgendes Segment mit einem vom Fahrzeug (10) bestimmten Abstand zu unterteilen; wobei die untere Grenze des ersten Segments (F1) der Position des Fahrzeugs (10) und die obere Grenze des dritten und letzten Segments (F3) von der maximalen Reichweite der Kamera (14) abhängt; wobei jedes Segment (F1, F2 und F3) durch seine eigenen Koeffizienten C0, C1, C2 und C3 charakterisiert ist,

- um (230) den ersten, zweiten und dritten Vektor (X1, X2 und X3) auf dem ersten, zweiten und dritten Segment (F1, F2 und F3) zu definieren, der jeweils einem bestimmten Abstand vom Fahrzeug (10) entspricht, und
- um die Krümmungsdaten für jeden der ersten, zweiten und dritten Vektoren (X1, X2 und X3) mithilfe der folgenden Formel zu extrahieren (240): $courbure(x) = \dfrac{f''(x)}{(1+f'^2(x))^{\frac{3}{2}}}$

3. Verfahren nach dem vorhergehenden Anspruch, bestehend aus der Definition (230) des ersten Vektors (X1) an der oberen Grenze des ersten Segments (F1), des zweiten Vektors (X2) an der oberen Grenze des zweiten Segments (F2) und des dritten Vektors (X3) an der oberen Grenze des dritten Segments (F3).

4. Verfahren nach einem der vorhergehenden Ansprüche, bestehend aus der Berechnung der ersten Trajektorie ($T_{E\text{-}Horizon}$):

- um (110) eine bestimmte Anzahl von Punkten zwischen der Position des Fahrzeugs (10) und einem Abstand vom Fahrzeug (10) in Abhängigkeit von der maximalen Reichweite der Kamera (14) durch lineare Interpolation der Krümmungsdaten zu berechnen; und
- Berechne (120) von jedem interpolierten Punkt aus die Koordinaten (X und Y) der ersten Trajektorie ($T_{E\text{-}Horizon}$) anhand der folgenden trigonometrischen Funktionen Cos und Sin:

$$X(i) = X(i-1) + dx * cos(\varphi(i-1) + dx * CourbureInterpol\acute{e}e(i))$$

$$Y(i) = Y(i-1) + dx * sin(\varphi(i-1) + dx * CourbureInterpol\acute{e}e(i))$$

wobei φ dem Gierwinkel des Fahrzeugs entspricht (10).

5. Verfahren nach einem der vorhergehenden Ansprüche, bestehend aus der grafischen Projektion mindestens eines Punktes (XC), der einen bestimmten Abstand entlang der X-Achse vom Startpunkt der ersten und zweiten berechneten Trajektorien ($T_{E\text{-}Horizon}$, $T_{CVM}$) entlang der X-Achse darstellt, in ein orthogonales Koordinatensystem XY, das die erste und zweite berechnete Trajektorie ($T_{E\text{-}Horizon}$, $T_{CVM}$) enthält, und der Berechnung der Differenz zwischen den Abständen ($Y_{CVM}$ und $Y_{E\text{-}Horizon}$), die durch Projektion des bestimmten Punktes (XC) auf die Y-Achse durch die Mittelpunkte der Pfade (CVE und CVC) der ersten und zweiten berechneten Trajektorie ($T_{E\text{-}Horizon}$ und $T_{CVM}$) erhalten werden; Die Ordinate X entspricht dem Abstand eines Punktes auf der ersten und zweiten berechneten Trajektorie ($T_{E\text{-}Horizon}$, $T_{CVM}$) des Fahrzeugs (10) vor dem Fahrzeug (10) relativ zur Ausgangsposition des Fahrzeugs (10) auf der Fahrspur (VV), und die Abszisse Y entspricht der Entwicklung der Verschiebung der Fahrspurmitte (VV) auf den berechneten Trajektorien ($T_{E\text{-}Horizon}$, $T_{CVM}$) des Fahrzeugs (10) vor dem Fahrzeug (10) relativ zur Fahrspurmitte (VV) an der Ausgangsposition des Fahrzeugs (10) auf der Fahrspur (VV).

6. Produktcomputerprogramm mit Anweisungen, die, wenn das Programm von einem Computer ausgeführt wird, den Computer veranlassen, die Schritte des Prozesses gemäß einem der Ansprüche 1 bis 5 durchzuführen.

7. Fahrzeug (10), das das Verfahren nach einem der Ansprüche 1 bis 5 implementiert, umfassend: ein Fahrerassistenzsystem, genannt ADAS-System (11), das mindestens eine Fahrzeuggeschwindigkeitsanpassungsfunktion in Kurven, genannt CSA-Funktion, aus einer Menge von Fahrerassistenzfunktionen bietet, die auf die dynamischen Steuerungskomponenten (12, 13) des Fahrzeugs (10) wirken, um einen autonomen Fahrmodus für das Fahrzeug (10) zu ermöglichen; eine Kamera (14), die digitale Bilder der Fahrspur (VV) auf der Fahrbahn des Fahrzeugs (10) aufnimmt; ein Kartierungsinformationssystem, genannt E-Horizon (15); Eine Verarbeitungsvorrichtung (17) umfasst eine erste Einrichtung (17') zum Empfangen der Krümmungsdaten vom E-Horizon-System (15) und zum Berechnen einer ersten Trajektorie ($T_{E\text{-}Horizon}$) des Fahrzeugs (10) sowie eine zweite Einrichtung (17") zum Empfangen der von der Kamera (14) aufgenommenen digitalen Bilder und zum Berechnen einer zweiten Trajektorie ($T_{CVM}$) des Fahrzeugs (10). Außerdem umfasst sie eine Fahrmodus-Management-Vorrichtung (18) für das Fahrzeug (10), die mit der Verarbeitungsvorrichtung (17) verbunden ist. Die Steuervorrichtung (18) ist ferner so ausgelegt, dass sie das ADAS-System (11) steuert, um die CSA-Funktion entsprechend der Differenz zwischen den Kurvenkrümmungen (VE, VC) der ersten und zweiten Trajektorie ($T_{E\text{-}Horizon}$ und $T_{CVM}$) zu aktivieren oder zu deaktivieren.

8. Fahrzeug (10) nach dem vorhergehenden Anspruch, ferner umfassend Kommunikationsmittel (20), die mit der Verwaltungseinrichtung (18) verbunden sind und in der Lage sind, von der Verwaltungseinrichtung (18) übermittelte Informationen über Funkwellen mit einem entfernten Informationsspeicher auszutauschen, der die Aktualisierung der Kartendaten des E-Horizon-Systems (15) ermöglicht.

**9.** Fahrzeug (10) nach einem der Ansprüche 7 oder 8, **dadurch gekennzeichnet, dass** es sich bei dem Fahrzeug (10) um ein autonomes Fahrzeug handelt.

**Claims**

**1.** Method of managing at least one autonomous driving mode of a motor vehicle (10) comprising a driver assistance system, called an ADAS system (11), implementing a vehicle speed adaptation function (10) in curves, called a CSA function, receiving mapping data from a mapping information system, called E-Horizon (15), providing lane curvature (VV) data on the trajectory extending in front of the vehicle (10) and capable of controlling the activation of the CSA function; said vehicle (10) further comprising a camera (14) capturing digital images of the trajectory extending in front of the vehicle (10); said method consisting of, starting from the same initial position (X0, Y0) of the vehicle (10) in its lane (VV), determined by the camera (14), calculating a first trajectory ($T_{E-Horizon}$) of the vehicle (10) from the data provided by the E-Horizon system (15), **characterized in that** the method further consists of calculating a second trajectory ($T_{CVM}$) of the vehicle (10) from the images captured by the camera (14), of calculating the difference between the curvatures of the turns (VE, VC) of the first and second calculated trajectories ($T_{E-Horizon}$, $T_{CVM}$) at the same determined distance (XC) from the initial position (X0, Y0) of the vehicle (10), and if the difference between the curvatures of the turns (VE, VC) of the first and second calculated trajectories ($T_{E-Horizon}$, $T_{CVM}$) is less than a determined threshold, of commanding the activation of the CSA function.

**2.** Method according to the preceding claim, consisting of calculating the second trajectory ($T_{CVM}$):

- to model (210) the profile of the median line (LM) identified in the lane followed (VV) by the vehicle (10) from the digital images captured by the camera (14) over a determined distance extending in front of the vehicle (10), between the vehicle (10) and the maximum range of the camera (14), by exploiting a third-degree polynomial, called the lane center polynomial, defined in a plane affine space equipped with a Cartesian coordinate system X, Y centered on the vehicle (10) of the form y=f(x) and expressed by: $f(x) = \textbf{C3}x^3 + \textbf{C2}x^2 + \textbf{C1}x + \textbf{C0}$, where x represents the distance along the axis of movement of the vehicle (10) separating the origin of the coordinate system ; **C0**: the lateral position of the median line (LM) at the origin of the coordinate system; **C1**: the initial heading at the origin of the coordinate system; C2: the initial curvature; and C3: the derivative of the curvature;
- to divide (220) the trajectory, considered on the median line (LM) of the lane (VV), extending in front of the vehicle (10), into first (F1), second (F2) and third (F3) contiguous and successive segments, of a distance determined from the vehicle (10); the lower limit of the first segment (F1) corresponding to the position of the vehicle (10) and the upper limit of the third and last segment (F3) depending on the maximum range of the camera (14); each segment (F1, F2 and F3) being **characterized by** its own coefficients C0, C1, C2 and C3,
- to define (230) the first, second and third vectors (X1, X2 and X3) respectively on the first, second and third segments (F1, F2 and F3), each corresponding to a determined distance from the vehicle (10), and
- to extract (240) the curvature data for each of the first, second and third vectors (X1, X2 and X3) using the following *formula*: $$courbure(x) = \frac{f''(x)}{(1+f'^2(x))^{\frac{3}{2}}}$$

**3.** Method according to the preceding claim, consisting of defining (230) the first vector (X1) at the upper limit of the first segment (F1), the second vector (X2) at the upper limit of the second segment (F2) and the third vector (X3) at the upper limit of the third segment (F3).

**4.** A method according to any one of the preceding claims, consisting of calculating the first trajectory ($TE_{-Horizon}$):

- to calculate (110) a determined number of points between the position of the vehicle (10) and a distance from the vehicle (10) depending on the maximum range of the camera (14) by linear interpolation of the curvature data; and
- from each interpolated point, calculate (120) the coordinates (X and Y) of the first trajectory ($T_{E-Horizon}$) based on the following trigonometric functions Cos and Sin: $X(i) = X(i-1) + dx * cos(\varphi(i-1) + dx * CourbureInterpolée(i))$ $Y(i) = Y(i-1) + dx * sin(\varphi(i-1) + dx * CourbureInterpolée(i))$ where $\varphi$ corresponds to the yaw angle of the vehicle (10).

5. A method according to any one of the preceding claims, consisting of graphically projecting into an orthogonal coordinate system XY containing the first and second calculated trajectories ($T_{E\text{-}Horizon}$, $T_{CVM}$), at least one point (XC) representing a determined distance along the X axis from the starting point of the first and second calculated trajectories ($T_{E\text{-}Horizon}$, $T_{CVM}$) along the X axis, and calculating the difference between the distances ($Y_{CVM}$ and $Y_{E\text{-}Horizon}$) obtained by projecting the determined point (XC) onto the Y axis, passing through the centers of the paths (CVE and CVC) of the first and second calculated trajectories ($T_{E\text{-}Horizon}$ and $T_{CVM}$); the ordinate axis X corresponding to the distance of a point on the first and second calculated trajectories ($T_{E\text{-}Horizon}$, $T_{CVM}$) of the vehicle (10), in front of the vehicle (10), relative to the initial position of the vehicle (10) on the lane (VV) and the abscissa axis Y corresponding to the evolution of the displacement of the center of the lane (VV) on the calculated trajectories ($T_{E\text{-}Horizon}$, $T_{CVM}$) of the vehicle (10), in front of the vehicle (10), relative to the center of the lane (VV) considered at the initial position of the vehicle (10) on the lane (VV).

6. Product computer program comprising instructions which, when the program is executed by a computer, cause the computer to carry out the steps of the process according to any one of claims 1 to 5.

7. Vehicle (10) implementing the method according to any one of claims 1 to 5, comprising: a driver assistance system, called ADAS system (11), offering at least one vehicle speed adaptation function in curves, called CSA function, from among a set of driver assistance functions acting on the dynamic control components (12, 13) of the vehicle (10) to be capable of providing an autonomous driving mode for said vehicle (10); a camera (14) capturing digital images of the lane (VV) on the trajectory of the vehicle (10); a mapping information system, called E-Horizon (15); a processing device (17) comprising first means (17') receiving the curvature data from the E-Horizon system (15) and calculating a first trajectory ($T_{E\text{-}Horizon}$) of the vehicle (10) and second means (17") receiving the digital images captured by the camera (14) and calculating a second trajectory ($T_{CVM}$) of the vehicle (10), and a driving mode management device (18) for said vehicle (10), coupled to the processing device (17); said control device (18) being further arranged to control the ADAS system (11) in order to activate or deactivate the CSA function according to the difference between the curve curvatures (VE, VC) of the first and second trajectories ($T_{E\text{-}Horizon}$ and $T_{CVM}$).

8. Vehicle (10) according to the preceding claim, further comprising communication means (20) coupled to the management device (18) capable of exchanging information delivered by the management device ( 18) via radio waves with a remote information storage space enabling the updating of the mapping data of the E-Horizon system (15)

9. Vehicle (10) according to any one of claims 7 or 8, **characterized in that** the vehicle (10) is an autonomous vehicle.

[Fig. 1]

[Fig. 2]

[Fig. 3]

[Fig. 4]

[Fig. 5]

[Fig. 6]

[Fig. 7]

**RÉFÉRENCES CITÉES DANS LA DESCRIPTION**

**Documents brevets cités dans la description**

- DE 102015212673 A1

**Littérature non-brevet citée dans la description**

- **GAMEZ SERNA CITALLINI et al.** Dynamic Speed Adaptation for Path Tracking Based on Curvature Information and Speed Limits. *SENSORS*, 01 October 2016, vol. 17 (6), 1389-29, https:/www.ncbi.nlm.nih.gov/articles/PMC5492420/pdf/sensors-17-011383.pdf